# FASCICULE DE BREVET EUROPEEN

(11) **EP 2 816 251 B1**
(45) Date de publication et mention de la délivrance du brevet: **03.06.2020**
(21) Numéro de dépôt: 14172454.2
(22) Date de dépôt: 13.06.2014
(51) Int. Cl.: F16D 55/226, F16D 65/092, F16D 69/04

(54) **FREIN POUR ROUE D'AÉRONEF, EN PARTICULIER POUR UN HÉLICOPTÈRE.**
BREMSE FÜR LUFTFAHRZEUGREIFEN, INSBESONDERE FÜR HUBSCHRAUBER
BRAKE FOR AIRCRAFT WHEEL, IN PARTICULAR FOR A HELICOPTER

(30) Priorité: 17.06.2013 FR 1355666
(43) Date de publication de la demande: 24.12.2014
(73) Titulaire: Safran Landing Systems, 78140 Vélizy-Villacoublay (FR)
(72) Inventeur: Delayre, Xavier, 78140 Vélizy-Villacoublay (FR); Hardy, Jérémy, 78140 Vélizy-Villacoublay (FR)
(74) Mandataire: Lavialle, Bruno François Stéphane

(56) Documents cités:
- US-A- 2 586 518
- US-A- 3 170 543
- US-A- 4 433 757
- US-A1- 2004 211 630

## Description

L'invention concerne un frein pour roue d'aéronef, en particulier pour un hélicoptère.

### ARRIERE-PLAN TECHNOLOGIQUE DE L'INVENTION.

Sur les aéronefs d'une certaine taille, on utilise généralement des freins comportant une pile de disques dont une moitié sont des stators, et l'autre moitié sont des rotors qui tournent avec la roue. Des actionneurs de freinage permettent de presser les disques les uns contre les autres pour engendrer un couple de freinage s'opposant à la libre rotation de la roue sur son essieu.

Pour des aéronefs plus petits, il est connu d'utiliser un frein à un seul disque tournant avec la roue, le disque étant associé à un étrier qui vient chevaucher le disque et dont les mors reçoivent deux plaquettes, dont une est montée mobile pour pouvoir pincer le disque entre les deux plaquettes au moyen d'un actionneur de freinage. Pour minimiser l'encombrement du frein, l'étrier est placé à cheval sur le disque par l'intérieur de celui-ci. Cependant, dans ce type de frein, les plaquettes sont tenues sur les deux mors de l'étrier par leurs extrémités, ce qui impose une certaine dimension transversale du mors qui passe à l'intérieur du disque lors du montage du frein. Cependant, dans des applications particulièrement exigeantes où le diamètre de l'orifice central du disque est petit, cet encombrement transversal rend difficile le montage du frein, ou oblige à utiliser des plaquettes de surface réduite.

Le document US 443 3757A montre un frein d'après le préambule de la revendication 1.

### OBJET DE L'INVENTION

L'invention a pour objet de proposer un frein à étrier qui se monte par l'intérieur du disque, adapté à l'utilisation de disques de diamètre réduit.

### PRESENTATION DE L'INVENTION

En vue de la réalisation de ce but, on propose un frein pour roue d'aéronef, comportant les caractéristiques techniques de la revendication 1.

Ainsi, il devient possible de limiter l'encombrement transversal de la plaquette fixe et du mors associé, tout en assurant le positionnement de la plaquette et la transmission des efforts de freinage. On peut dès lors utiliser l'étrier avec des disques plus petits, tout en permettant le passage du mors externe par l'intérieur du disque.

### DESCRIPTION DES FIGURES

L'invention sera mieux comprise à la lumière de la description qui suit d'un mode particulier de réalisation de l'invention, en référence aux figures des dessins annexés parmi lesquelles :
- la figure 1 est une vue en perspective d'un frein avec son étrier et son disque en place sur un atterrisseur d'hélicoptère, vue du côté du disque, la roue n'ayant pas été représentée pour plus de clarté ;
- la figure 2 est une vue en perspective du frein de la figure 1 vu de l'arrière ;
- la figure 3 est une vue de côté de l'étrier de la figure 1 ;
- la figure 4 est une vue de face de l'étrier de la figure 1 avec coupe selon la ligne D-D de la figure 3;
- la figure 5 est une vue de côté du frein de la figure 1 avec une coupe partielle au niveau de la plaquette fixe ;
- la figure 6 est une vue analogue à celle de la figure 5 d'un deuxième mode particulier de réalisation qui ne forme pas partie de l'invention.

### DESCRIPTION DETAILLEE D'UN MODE DE REALISATION DE L'INVENTION

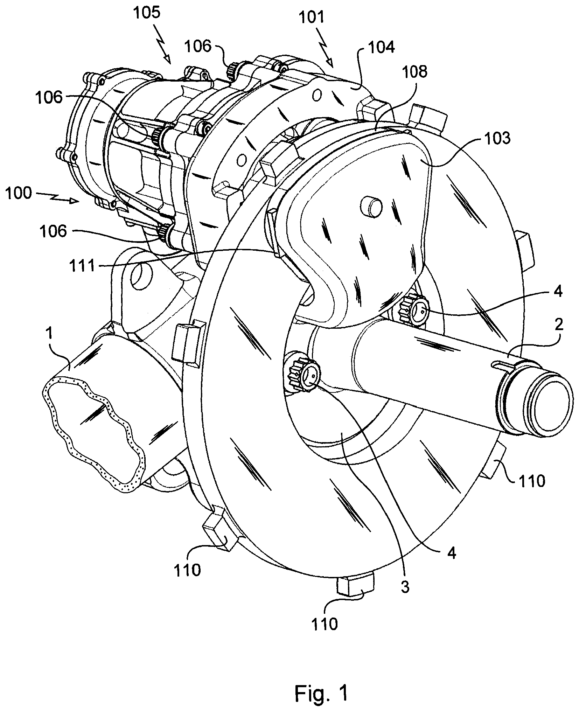

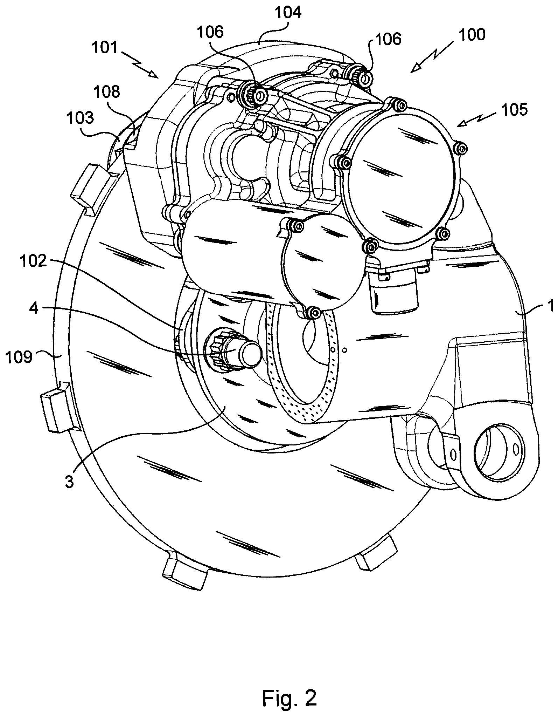

En référence aux figures 1 à 4, le frein 100 de l'invention est destiné à être installé sur un atterrisseur d'aéronef dont on aperçoit le bras inférieur 1 qui porte un essieu 2. L'essieu 2 est pourvu d'une collerette 3 sur lequel le frein est rapporté au moyen de deux boulons 4.

Le frein 100 comporte un étrier 101 muni de deux oreilles 102 permettant la fixation du frein à la collerette 3. L'étrier 101 comporte un mors externe 103 et un support 104 qui reçoit un actionneur de freinage 105, ici un actionneur électromécanique, qui est rapporté sur le support 104 au moyen de vis 106.

L'actionneur de freinage 105 comporte un poussoir au bout duquel un mors interne mobile (non visible) reçoit une plaquette mobile 107 qui est poussée par le poussoir pour se rapprocher d'une plaquette fixe 108 portée par le mors externe 103. Un disque 109 s'étend entre les plaquettes 107, 108 de façon à pouvoir être pincé entre les plaquettes sous l'action de l'actionneur 105. Le disque comporte des tenons 110 qui sont reçus dans des mortaises conformes de la jante de la roue pour être solidaire en rotation de celle-ci, tout en étant libre de se déplacer axialement. Le disque est ainsi monté « flottant ».

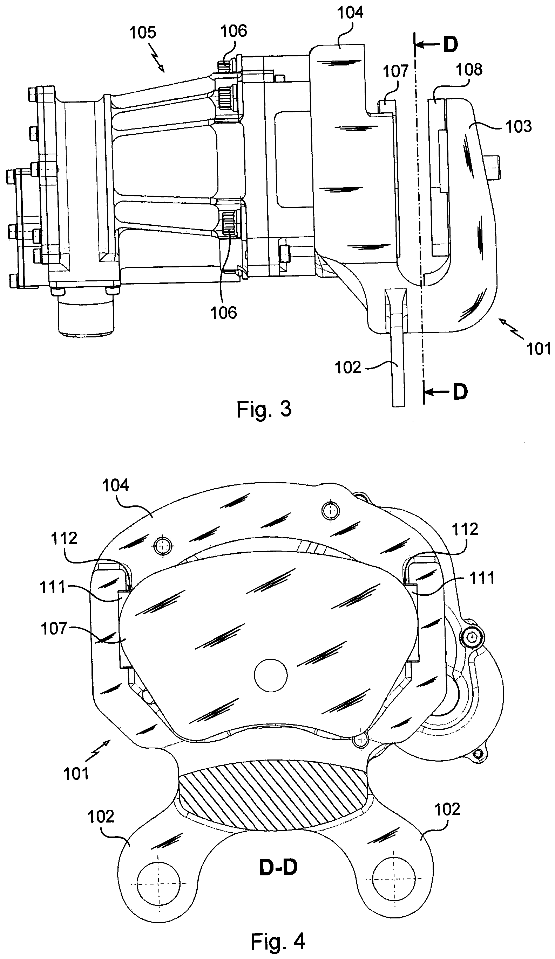

Ici, les plaquettes 107, 108 sont de formes identiques et comportent des cales 111 qui saillent latéralement des plaquettes pour être reçues dans des logements correspondants 112 du mors associé (visibles à la figure 4). Les efforts latéraux de freinage sont transmis par les cales 111 de la plaquette mobile 107 au support 104, de sorte que l'actionneur 105 ne subit que les efforts axiaux de freinage.

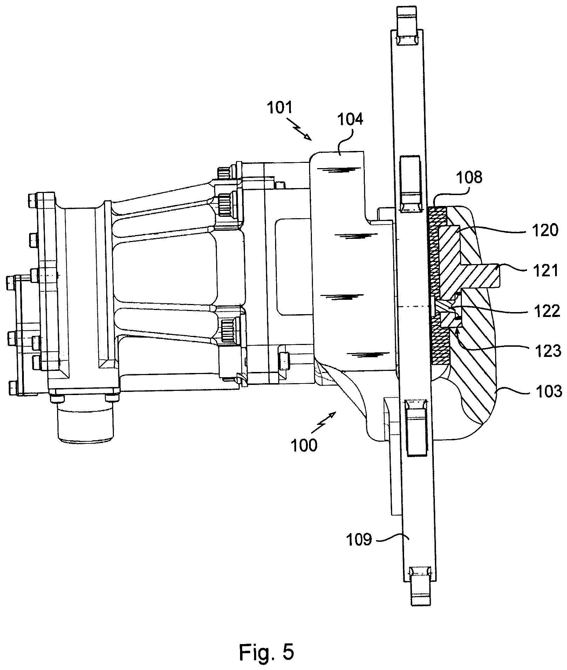

Selon l'invention, et ainsi que cela est plus spécifiquement visible à la figure 5, le mors externe 103 reçoit un pion central 120 qui s'étend à mi-chair entre le mors externe 103 et la plaquette fixe 108. Les efforts de freinage sont transmis par le pion central 120 de la plaquette fixe 108 au mors externe 103. Le pion central 120 forme une protrusion saillant d'une face arrière de la plaquette 108 pour être reçue dans un réceptacle 123, ici directement réalisé dans le mors externe 103.

Le pion central 120 est équipé d'une queue de centrage 121 qui s'étend dans un orifice débouchant du mors externe 103 pour saillir extérieurement de celui-ci, ce qui permet la vérification visuelle de la présence du pion central 120.

En outre, une agrafe 122 s'étend entre la plaquette fixe 108 et pion central 120 pour solidariser ces deux éléments entre eux. A cet effet, le pion central 120 et la plaquette fixe 108 présentent des évidements en regard pour recevoir ladite agrafe 122. Comme les plaquettes 107, 108 sont identiques, on aperçoit sur la figure 4 l'évidemment en question sur la plaquette mobile 107. On note que la plaquette fixe 108 comporte également des cales 111, sans utilité ici.

L'utilisation d'un pion central 120 pour la transmission des efforts entre la plaquette fixe 108 et le mors externe 103 permet de diminuer l'encombrement latéral du mors externe 103, puisque celui-ci n'a plus besoin de présenter des extensions latérales dans lesquelles seraient ménagés des logements 112 propres à recevoir les cales 107. Ainsi, et comme cela est visible à la figure 1, le contour externe du mors externe 103 peut suivre exactement le contour externe de la plaquette fixe 108, afin d'offrir à celle-ci une surface de réaction suffisante, tout en limitant l'encombrement latéral du mors extérieur 103. On voit d'ailleurs les cales 111 de la plaquette fixe 108 dépasser (légèrement) du mors externe 103.

De la sorte, l'encombrement latéral du mors externe 103 est limité au strict nécessaire, ce qui permet de le faire passer dans l'orifice central d'un disque de taille plus petite que celle des disques habituellement utilisés avec ce genre de freins.

Pour le démontage d'un tel frein, on commence par enlever la roue, puis on desserre les boulons 4 qui retiennent l'étrier sur l'atterrisseur. On enlève en bloc l'étrier et le disque 109, puis une fois l'ensemble éloigné de l'atterrisseur, on sépare le disque de l'étrier en faisant passer le mors externe 103 par l'orifice central du disque 109. La limitation de l'encombrement latéral du mors externe 103 permet de la faire passer dans un orifice central réduit.

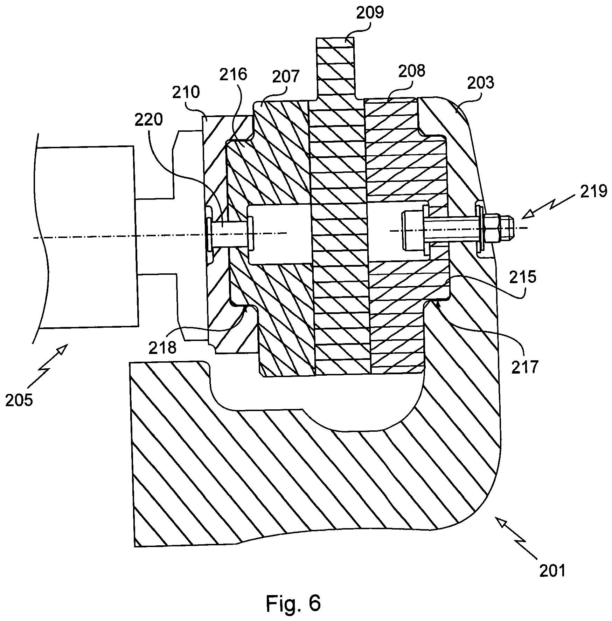

Selon un deuxième mode de réalisation, qui ne forme pas partie de l'invention, illustré à la figure 6, sur laquelle les références des éléments identiques ont été augmentées d'une centaine, les plaquettes 207, 208 présentent toutes deux des protrusions centrales 215, 216 réalisées intégralement avec la plaquette et qui s'étendent en saillie des faces arrières des plaquettes pour être reçues dans des réceptacles 217, 218 réalisés respectivement dans le mors externe 203 et dans le mors interne 210.

La plaquette fixe 208 est solidarisée sur le mors externe 203 au moyen d'un boulon 219, tandis que la plaquette mobile 207 est solidarisée sur le mors interne 210 au moyen d'une agrafe 220.

Ainsi, pour les deux plaquettes, les efforts latéraux sont transmis par les protrusions, de sorte que des cales latérales sont inutiles.

## Revendications

1. Frein pour roue d'aéronef, comportant d'une part un étrier avec un mors externe (103) recevant une plaquette fixe (108) et un mors interne qui est mobile (210) sous l'action d'un actionneur de freinage (105) et qui reçoit une plaquette mobile (107), et d'autre part un disque (109) qui s'étend entre les plaquettes et qui comporte des moyens de sa solidarisation en rotation (110) avec la roue, au moins l'une des plaquettes comportent une protrusion (120), s'étendant en saillie d'une face arrière de la plaquette pour être reçue dans un réceptacle conforme (123 ) du mors associé assurant à la fois le positionnement de la plaquette sur le mors et la transmission des efforts de freinage de ladite plaquette au mors associé ; **caractérisé en ce que** la protrusion (120) est réalisée au moyen d'un pion central (120) reçu dans un logement débouchant sur la face arrière de la plaquette pour saillir de celle-ci et s'étendre à mi-chair dans le mors et dans la plaquette.

2. Frein selon la revendication 1, dans lequel le pion central (120) comporte une queue de centrage (121) qui s'étend dans un orifice débouchant du mors externe (103) pour saillir extérieurement de celui-ci.

3. Frein selon la revendication 1, dans lequel le pion central (120) et la plaquette fixe (108) sont solidarisés entre eux au moyen d'une agrafe (122).

4. Frein selon la revendication 1, dans lequel la plaquette fixe (108) et le mors externe (103) ont des contours externes sensiblement identiques.

5. Frein selon la revendication 1, dans lequel le réceptacle est réalisé directement dans le mors.

## Patentansprüche

1. Bremse für ein Luftfahrzeugrad, umfassend einerseits einen Bremssattel mit einer äußeren Backe (103), die eine ortsfeste Platte (108) aufnimmt, und einer inneren Backe (210), die unter der Wirkung eines Bremsaktors (105) beweglich ist und eine bewegliche Platte (107) aufnimmt, und andererseits eine Scheibe (109), die sich zwischen den Platten erstreckt und Mittel für ihre Drehverbindung (110) mit dem Rad umfasst, wobei mindestens eine der Platten einen Vorsprung (120) umfasst, der von einer Rückseite der Platte vorsteht, um in einer konformen Aufnahme (123) der dazugehörigen Backe aufgenommen zu werden, und gleichzeitig die Positionierung der Platte an der Backe und die Übertragung der Bremskräfte von der Platte auf die dazugehörige Backe sicherstellt; **dadurch gekennzeichnet, dass** der Vorsprung (120) mit Hilfe eines zentralen Zapfens (120) realisiert ist, der in einer Aufnahme aufgenommen ist, die auf der Rückseite der Platte mündet, um von dieser vorzustehen und sich halb in der Backe und halb in der Platte zu erstrecken.

2. Bremse nach Anspruch 1, bei der der zentrale Zapfen (120) einen Zentrierbolzen (121) umfasst, der sich in einer Öffnung erstreckt, die auf der äußeren Backe mündet (103), um aus ihr herauszuragen.

3. Bremse nach Anspruch 1, bei der der zentrale Zapfen (120) und die ortsfeste Platte (108) miteinander mit Hilfe einer Klammer (122) verbunden sind.

4. Bremse nach Anspruch 1, bei der die ortsfeste Platte (108) und die äußere Backe (103) im Wesentlichen identische äußere Konturen haben.

5. Bremse nach Anspruch 1, bei der die Aufnahme direkt in der Backe ausgebildet ist.

## Claims

1. A brake for an aircraft wheel comprising firstly calipers with an outer jaw (103) receiving a stationary brake pad (108) and an inner jaw that is movable (210) under drive from a braking actuator (105) and that receives a movable brake pad (107), and secondly a disk (109) that extends between the brake pads and that includes means (110) for constraining it to move in rotation with the wheel, at least one of the brake pads including a protrusion (120) projecting from a rear face of the pad to be received in a matching receptacle (123) of the associated jaw and serving both to position the pad on the jaw and to transmit braking forces from the stationary pad to the associated jaw, **characterized in that** the protrusion (120) is made by means of a central peg (120) received in an open housing in the rear face of the brake pad so as to project therefrom and extend half and half in the jaw and in the brake pad.

2. A brake according to claim 1, wherein the central peg (120) includes a centering stud (121) that extends through an open orifice of the outer jaw (103) to project externally therefrom.

3. A brake according to claim 1, wherein the central peg (120) and the stationary brake pad (108) are secured to each other by means of a fastener pin (122).

4. A brake according to claim 1, wherein the stationary brake pad (108) and the outer jaw (103) have outlines that are substantially identical.

5. A brake according to claim 1, wherein the receptacle is made directly in the jaw.
